# EUROPÄISCHE PATENTSCHRIFT

(11) **EP 4 074 443 B1**
(45) Veröffentlichungstag und Bekanntmachung des Hinweises auf die Patenterteilung: **28.02.2024**
(21) Anmeldenummer: 21168250.5
(22) Anmeldetag: 14.04.2021
(51) Int. Cl.: B23B 31/177

(54) **SPANNFUTTER**
COLLET CHUCK
MANDRIN

(43) Veröffentlichungstag der Anmeldung: 19.10.2022
(73) Patentinhaber: SMW-AUTOBLOK Spannsysteme GmbH, 88074 Meckenbeuren (DE)
(72) Erfinder: HELM, Peter, 88074 Meckenbeuren (DE); WOLF, Emanuel, 88677 Markdorf (DE)
(74) Vertreter: Christ, Niko

(56) Entgegenhaltungen:
- US-A1- 2020 086 397
- US-B2- 10 252 348

## Beschreibung

Die Erfindung bezieht sich auf ein Spannfutter, durch das Werkstücke vereinzelt zu deren Bearbeitung durch eine Werkzeugmaschine abgestützt und koaxial zu einer Zentrierachse ausgerichtet sind, die als Bezugsreferenz für die Bearbeitung des Werkstückes durch die Werkzeugmaschine dient, nach dem Oberbegriff des Patentanspruches 1.

Beispielsweise ist eine solche Spannvorrichtung, die unter dem Fachbegriff Spannfutter bekannt ist, aus der DE 10 2015 204 502 B4 zu entnehmen. Zwischen den Grundbacken und einer mechanisch betätigbaren Antriebseinheit ist eine Wippe und ein Mitnehmer vorgesehen, die jeweils mit einer der Wippen trieblich verbunden sind. Mit einem axial bewegbaren Druckkolben sind die Mitnehmer über einen Koppelring trieblich gekoppelt, sodass die Betätigungskraft des Druckkolbens auf den Mitnehmer einwirkt. Durch die axialen Bewegungen des Mitnehmers und des Koppelteils entsteht eine radial gerichtete Zustellbewegung für die Spannbacken, da diese mit dem Mitnehmer verbunden und in einer Führungsnut beweglich gelagert sind.

Weitere solche Spannvorrichtungen sind den Druckschriften US 2020/086397 A1 oder US 10,252,348 B2 zu entnehmen

Da die Einspannung eines Werkstückes mittels zwei Paaren von diametral gegenüberliegende Spannbacken eine mechanische Überbestimmung darstellt, ist der Bewegungsablauf zwischen den Spannbacken, den Mitnehmern und dem Koppelteil und dem Werkstück gegebenenfalls auszugleichen. Wenn nämlich eines der Paare der Spannbacken früher an das einzuspannende Werkstück auftrifft, ist deren Zustellbewegung zu stoppen, um zu gewährleisten, dass die dazu senkrecht verlaufenden Spannbacken die noch vorhandene Distanz zwischen diesen und der Oberfläche des Werkstückes zurücklegen können. Erst wenn sämtliche der vier Spannbacken an der Oberfläche des Werkstückes anliegen, soll eine entsprechende Spannkraft erzeugt sein. Das Bewegungsspiel dient somit als Ausgleich für die Spannbacken, wenn diese in Richtung des Werkstückes bewegt sind. Insbesondere wenn die Werkstücke eine rechteckförmige Außenkontur aufweisen, so dass deren Seitenlängen unterschiedlich bemessen sind, entsteht die Notwendigkeit, diese unterschiedlichen Distanzen zwischen den Paaren von diametral gegenüberliegenden Spannbacken auszugleichen.

Aufgrund des erforderlichen Bewegungsspiels entsteht jedoch oftmals eine erhebliche Ungenauigkeit für die Einspannpositionen, so dass die Positionierung des Werkstückes fehlerhaft ist. Dies wiederum führt zu Bearbeitungsfehlern an dem Werkstück selbst, da die Wiederholungsgenauigkeit des Einspannens von einer Vielzahl von identischen Werkstücken nicht gewährleistet werden kann.

Nachteiliger Weise sind jedoch solche Bewegungsmöglichkeiten hinsichtlich der Spannwirkung mit oftmals erheblichen Toleranzabweichungen verbunden, so dass die erforderliche Spannkraft nicht exakt vorhersehbar bzw. vorbestimmbar ist. Die vorhandenen Bewegungsspiele zwischen den im Kraftfluss angeordneten Bauteilen führen nämlich dazu, dass eine Relativbewegung zwischen diesen Bauteilen entsteht.

Diese Nachteile wurden von der Patentanmelderin erkannt und durch die eigene Entwicklung, die in EP 3 623 085 A1 beschrieben ist, ausgeräumt. Das dort gezeigte Spannfutter weist einem Futterkörper auf, an dem jeweils zwischen zwei benachbarten Spannbacken eine Wippe vorgesehen ist, durch die ein Bewegungsausgleich zwischen den beiden Spannbacken erfolgt, und zwar insbesondere dann, wenn einer der Spannbacken räumlich oder zeitlich vor der anderen Spannbacke in Wirkkontakt mit dem einzuspannen Werkstück gelangt. Die axiale Zustellbewegung der Antriebseinrichtungen ist zwar über die entsprechenden Schrägverzahnungen, Schrägflächen oder einer Greifhaken-Verbindung auf die jeweiligen Spannbacken übertragen, jedoch können die einzuspannenden Werkstücke zum einen eine rechteckförmige oder andere Querschnittskonturen aufweisen, sodass zwei gegenüberliegende Spannbacken vor den dazu senkrecht angeordneten Spannbacken in Wirkkontakt mit dem Werkstück gelangen, oder zum anderen sind die Werkstücke zunächst nicht koaxial zu der als Bezugsreferenz dienenden Zentrierachse ausgerichtet und durch die Zustellbewegung der vier miteinander synchron angetriebenen Spannbacken ist die Positionierung des einzuspannenden Werkstückes erreicht.

Bei der Anordnung gemäß der vorgenannten Patentanmeldung ist als nachteilig anzusehen, dass die Antriebseinrichtungen koaxial zu der Längsachse des Futterkörpers ausgerichtet ist und folglich einen erheblichen Bauraum benötigt, der sich zudem unmittelbar in dem Arbeitsbereich einer Werkzeugmaschine befindet. Die Spannfutter sind nämlich üblicherweise an einer Palette oder einem Werkzeugtisch befestigt und das zu bearbeitende Werkstück ist an dem Spannfutter vormontiert. Die Positionierung des Spannfutters in Bezug auf die Bezugsreferenz der Werkzeugmaschine ist exakt vorgegeben und entsprechend wiederholungsgenau beim Aus- und Einbauen des Spannfutters. Sobald daher das Werkstück koaxial zu der Längsachse des Futterkörpers durch die vier Spannbacken ausgerichtet ist, verläuft dieses auch koaxial zu der als Bezugsreferenz dienenden Zentrierachse der Werkzeugmaschine, die üblicherweise der Längsachse des Futterkörpers entspricht. Allerdings ist der Druckkolben unmittelbar unterhalb der Bearbeitungsebene angeordnet.

Oftmals ist es jedoch erforderlich, dass die im Arbeitsbereich einer Werkzeugmaschine vorhandenen Räume für eine solche Anordnung der Antriebseinrichtungen nicht vorhanden sind.

Darüber hinaus können die Ausgleichsbewegungen zwischen zwei benachbarten Spannbacken, die im Stand der Technik in Form einer Ausgleichs-Bewegung vorgesehen sind, nicht unmittelbar auf andere Spannfutter übertragen sein.

Es ist daher Aufgabe der Erfindung, ein Spannfutter der eingangs genannten Gattung derart weiterzubilden, dass zum einen die Ausgleichs-Bewegungen zwischen zwei benachbarten und senkrecht zueinander verlaufenden Spannbacken unabhängig von deren Zustellbewegung und Wirkkontakt mit dem einzuspannenden Werkstück ausgeglichen sind, und dass zum anderen die Bauhöhe eines solchen Spannfutters möglichst klein bemessen ist.

Diese Aufgabe ist durch die Merkmale des kennzeichnenden Teils von Patentanspruch 1 gelöst.

Weitere vorteilhafte Weiterbildungen der Erfindung ergeben sich aus den Unteransprüchen.

Dadurch, dass jede Antriebseinrichtung eine linear bewegliche Kolbenstange oder Gewindespindel aufweist, deren jeweilige Längsachse senkrecht zu der Zentrierachse angeordnet ist, ist eine äußerst geringe Bauhöhe für solche Spannfutter vorhanden, da die Antriebseinrichtungen im Wesentlichen in der von dem Futterkörper gebildeten Ebene verlaufen, so dass die Bauhöhe parallel zu der Zentrierachse von der räumlichen Ausdehnung der Antriebseinrichtungen nicht beeinflusst ist. Die Länge der jeweiligen Antriebseinrichtungen hat nämlich keinerlei Auswirkungen auf die Bauraumhöhe des Spannfutters, selbst wenn die Länge der Antriebseinrichtungen derart bemessen ist, dass diese über die Außenkante des Futterkörpers überstehen, ist die Bauhöhe des Spannfutters dadurch nicht tangiert.

Die räumliche Ausdehnung sowie die erforderlichen axialen Bewegungen der Antriebseinrichtungen verlaufen demnach in einer horizontalen Ebene, sodass die Bauhöhe des Spannfutters vorteilhafter Weise durch die Anordnung der Antriebseinrichtungen nicht beeinflusst ist, denn die Antriebseinrichtungen können über die Außenseite des Spannfutters überstehen und benötigen folglich keinen Bauraum, der parallel zur Längsachse des Spannfutters verläuft.

Aufgrund von konstruktiven Maßnahmen sind die axialen Bewegungen der Antriebseinrichtungen derart umgeleitet bzw. auf die Spannbacken übertragen, dass diese synchron in radialer Richtung auf das einzuspannende Werkstück zubewegt und zeitgleich der Spannvorgang für sämtliche vorhandenen Spannbacken eingeleitet werden kann. Die Spannbacken sind nämlich über Schrägverzahnungen oder einem Keilhakengestänge trieblich mit mindestens einer der Antriebseinrichtungen gekoppelt. Die axialen Bewegungen der Antriebseinrichtungen sind demnach im Inneren des Futterkörpers in radiale Zustell- und Spannbewegungen der Spannbacken umgewandelt.

Sollten mehrere Antriebseinrichtungen für die jeweiligen Bewegungen der Spannbacken vorhanden sein, dann sind diese mittels eines Synchronringes aufeinander abgestimmt, um zu gewährleisten, dass sowohl die Betätigungskräfte der Antriebseinrichtungen als auch deren Bewegungsgeschwindigkeiten miteinander vollständig übereinstimmen, sodass diese physikalischen Parameter unmittelbar auf sämtliche der vorhandenen Spannbacken einwirken. Der Synchronring ist dabei drehbar um die Längsachse des Futterkörpers in diesem gelagert, sodass die axialen Bewegungen der Antriebseinrichtungen in eine Rotationsbewegung des Synchronringes umgewandelt ist.

Um die übliche Verbindung zwischen der jeweiligen Antriebseinrichtungen und dem Synchronring zu erreichen, ist an der Außenseite des Synchronringes für jeden der Antriebseinrichtungen eine Verzahnung vorgesehen, die in eine der jeweiligen Antriebseinrichtungen zugeordnete Verzahnung eingreift, sodass eine formschlüssige Wirkverbindung zwischen den jeweiligen Antriebseinrichtungen und dem Synchronring geschaffen ist. Die vorhandenen Antriebseinrichtungen und der Synchronring bilden demnach eine Art Getriebe zur Synchronisation der Zustellkräfte, der Zustellgeschwindigkeiten und zur Abstimmung der benötigten Spannkräfte.

Darüber hinaus ist es oftmals erforderlich, dass die Spannbewegungen der Spannbacken aufeinander abgestimmt sind. Wenn nämlich ein Werkstück einzuspannen ist, dessen Querschnittsform nicht rotationssymmetrisch ist, es sich also beispielsweise um ein rechteckförmiges Werkstück handelt, treffen zwei der gegenüberliegenden Spannbacken früher auf die Außenseite des Werkstückes auf als die beiden dazu senkrecht angeordneten Spannbacken. Die Zustellbewegung des ersten Paares der Spannbacken ist daher zu stoppen, und zwar solange bis das zweite Paar der Spannbacken auf das Werkstück auftrifft. Eine solche Ausgleichsbewegung kann dadurch ermöglicht sein, dass zwei benachbarte Spannbacken über eine Wippe trieblich miteinander verbunden sind. Die Wippe ist dabei um einen Lagerbolzen verschwenkbar an dem Futterkörper gelagert. Sobald eine der beiden Spannbacken auf das Werkstück auftrifft, entsteht ein Drehmoment, das auf die Wippe einseitig einwirkt, wodurch diese in Richtung des Inneren des Futterkörpers verschwenkt ist. Die bislang noch nicht auf dem Werkstück aufliegende Spannbacke kann demnach weiter radial bewegt und somit zugestellt sein, ohne dass die bereits anliegenden Spannbacken eine Spannkraft auf das Werkstück ausüben. Erst wenn sämtliche Spannbacken gleichzeitig auf der Außenseite des Werkstückes aufliegen, also mit diesen in einem Wirkkontakt stehen, baut sich aufgrund der weiteren axialen Bewegung der Antriebseinrichtungen eine Spannkraft auf, die von den Spannbacken auf das zu haltende Werkstück weitergegeben ist.

Mithilfe dieser Ausgleichsbewegungen der Spannbacken bzw. der diese verbindenden Wippen kann das einzuspannende Werkstück exakt koaxial zu der Längsachse des Futterkörpers ausgerichtet sein. Diese Längsachse des Futterkörpers ist als Zentrierachse für die Bearbeitung des Werkstückes anzusehen, denn diese Zentrierachse dient als Bezugsreferenz für die Bearbeitungsmaschine. Die in der Werkzeugmaschine hinterlegten Steuerprogramme kennen nämlich die Position und den Verlauf der Zentrierachse, sodass die jeweiligen Arbeitsschritte in Bezug auf das eingespannte Werkstück vorgenommen werden können.

In der Zeichnung ist ein Ausführungsbeispiel eines Spannfutters mit zwei Antriebsvarianten dargestellt, das nachfolgend näher erläutert ist. Im Einzelnen zeigt:
- Figur 1: ein Spannfutter, mit zwei mechanischen Antriebseinrichtungen, das auf einem einer Werkzeugmaschine zugeordneten Werkzeugtisch befestigt ist, bestehend aus vier Spannbacken, durch die ein zu bearbeitendes Werkstück koaxial zu einer Zentrierachse gehalten ist, in perspektivischer Ansicht,
- Figur 2a: das Spannfutter gemäß Figur 1, im geöffneten Zustand der Spannbacken und im Schnitt,
- Figur 2b: das Spannfutter gemäß Figur 2a, im gespannten Zustand der Spannbacken,
- Figur 3a: das Spannfutter gemäß Figur 1, mit den zwei senkrecht zu der Zentrierachse angeordneten Antriebseinrichtungen, durch die die vier Spannbacken synchron bewegt sind, im geöffneten Zustand der Spannbacken,
- Figur 3b: das Spannfutter gemäß Figur 3a, im eingespannten Zustand der Spannbacken,
- Figur 4a: das Spannfutter gemäß Figur 1, entlang einer Schnittlinie parallel zur X-Achse,
- Figur 4b: das Spannfutter gemäß Figur 1 entlang einer Schnittlinie parallel zur Y-Achse,
- Figur 5: eine Schnittebene gemäß Figur 1, in Draufsicht auf die von der X- und Y-Achse gebildeten Ebene,
- Figur 6a: das Spannfutter gemäß Figur 1, im geöffneten Zustand, in perspektivischer Ansicht,
- Figur 6b: das Spannfutter gemäß Figur 6a, im gespannten Zustand,
- Figur 7a: das Spannfutter gemäß Figur 6a, mit einer Ausgleichs-Wippe, im horizontalen Zustand der Wippe,
- Figur7b: das Spannfutter gemäß Figur 6b, mit einer Ausgleichs-Wippe, im verschwenkten Zustand der Wippe,
- Figur 8: das Spannfutter gemäß Figur 1, in Explosionsdarstellung, und
- Figur 9: das Spannfutter gemäß Figur 1, mit einem Elektromotor als Antriebseinrichtungen für die Betätigung der Spannbacken.

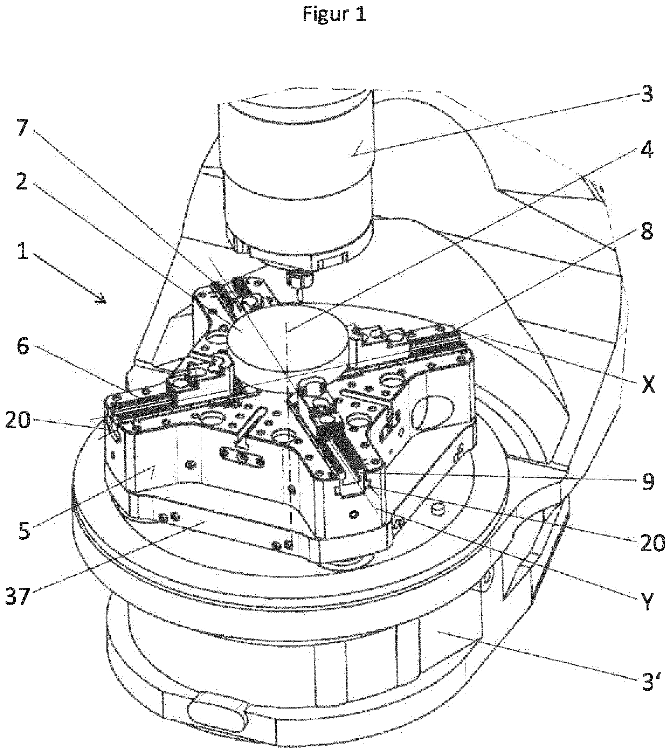

In Figur 1 ist ein Spannfutter 1 abgebildet, durch das ein Werkstück 2 an einem einer Werkzeugmaschine 3 zugeordneten Werkzeugmaschinentisch 3' zu halten ist. Das Werkstück 2 kann dabei eine beliebige Außenkontur, insbesondere eine rotationssymmetrische, rechteckförmige oder elliptische Außenkontur, aufweisen. Das Werkstück 2 soll nämlich durch die Werkzeugmaschine 3 bearbeitet sein. Um möglichst wiederholungsgenau und zentrierte Einspannpositionen für baugleiche Werkstücke 2 zu erreichen, ist eine Zentrierachse 4 definiert, die im gezeigten Ausführungsbeispiel mit der Längsachse des Spannfutters 1 übereinstimmt. Die Zentrierachse 4 dient als Bezugsreferenz für die Werkzeugmaschine 3, sodass sämtliche Bearbeitungsschritte an dem Werkstück 2, ausgehend von der Zentrierachse 4 vorgenommen werden können. Die Position des Spannfutters 1 an dem Werkzeugtisch 3' bleibt unverändert, sodass sich dessen Zentrierachse 4 gegenüber der Position der Werkzeugmaschine 3 nicht verändert und wenn baugleiche Werkstücke 2 ausgewechselt sind, verlaufen deren jeweilige Symmetrieachse koaxial zu der Zentrierachse 4.

Jedes der einzuspannenden Werkstücke 2 soll demnach derart an dem Spannfutter 1 zentriert gehalten sein, dass die Symmetrieachse der zu bearbeitenden Werkstücke 2 fluchtend bzw. koaxial zu der Zentrierachse 4 ausgerichtet ist.

Um das Werkstück 2 derart zentriert einspannen zu können, besteht das Spannfutter 1 aus einem Futterkörper 5, in dem im gezeigten Ausführungsbeispiel vier Führungsnuten 20 eingearbeitet sind. Die Führungsnuten 20 sind dabei in Richtung der Zentrierachse 4 ausgerichtet und verlaufen demnach radial. Zudem sind die Führungsnuten 20 nach oben offen, sodass in diese jeweils eine Spannbacke 6, 7, 8 oder 9 eingesetzt werden kann. Jede der vier Spannbacken 6, 7, 8, 9 ist dabei beweglich in der jeweiligen Führungsnut 20 gelagert, sodass jede der Spannbacken 6, 7, 8, 9 in Richtung der Zentrierachse 4 zustellbar oder von dieser wegbewegbar ist. Zwischen den Führungsnuten 20 dient die Oberfläche des Futterkörpers 5 als Auflage 5' für die zu spannenden Werkstücke 2.

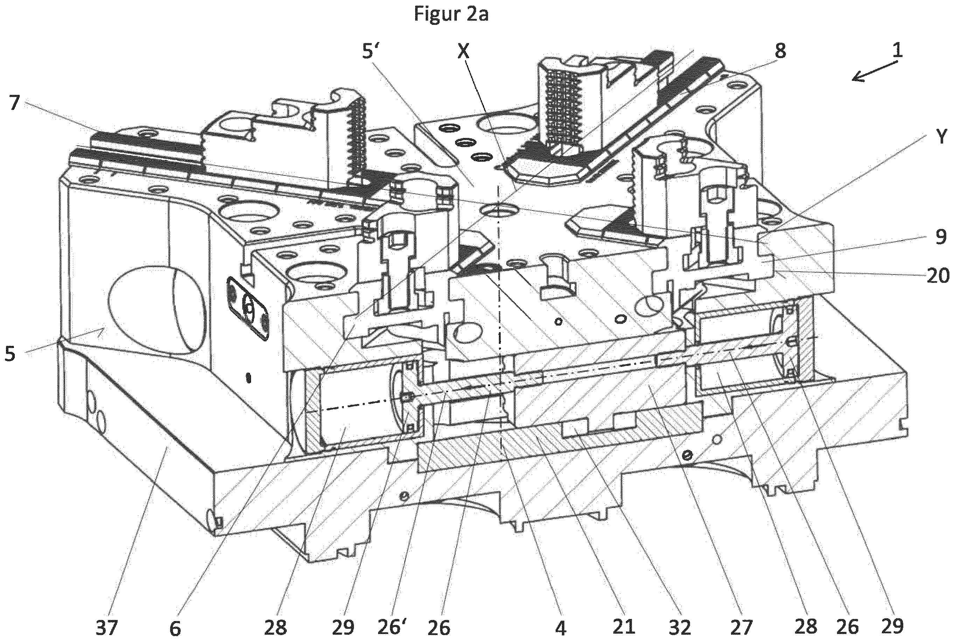

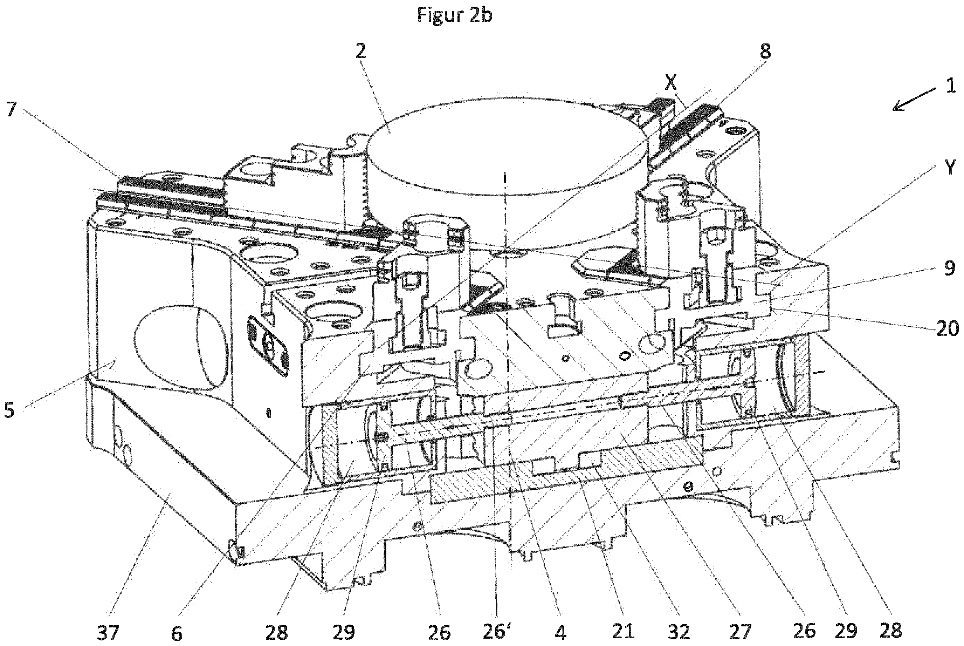

Gemäß den Figuren 2a und 2b sind im Inneren des Futterkörpers 5 unterschiedliche Funktionsebenen I, II, III und IV vorgesehen, die nachfolgend detaillierter beschrieben sind.

Die Funktionsebene I ist durch einen Synchronring 21 gebildet, der zentrisch um die Zentrierachse 4 angeordnet ist. Der Synchronring 21 steht in einer formschlüssigen Wirkverbindung mit der jeweiligen Antriebseinrichtung 12, 13 und ist drehbar in dem Futterkörper 5 gelagert.

Eine dritte Funktionsebene III ist durch einen Ausgleichspendellager in Form einer Wippe 18 gebildet.

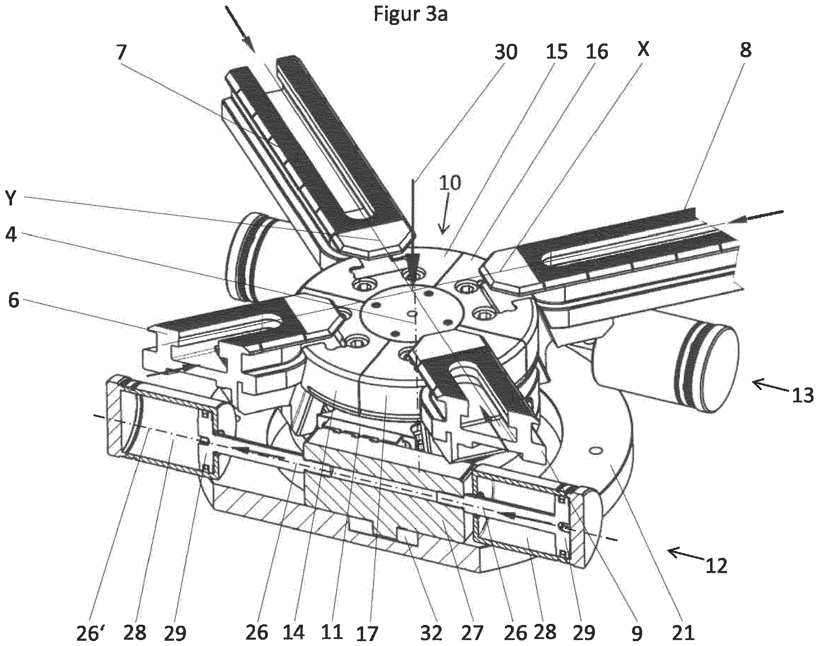

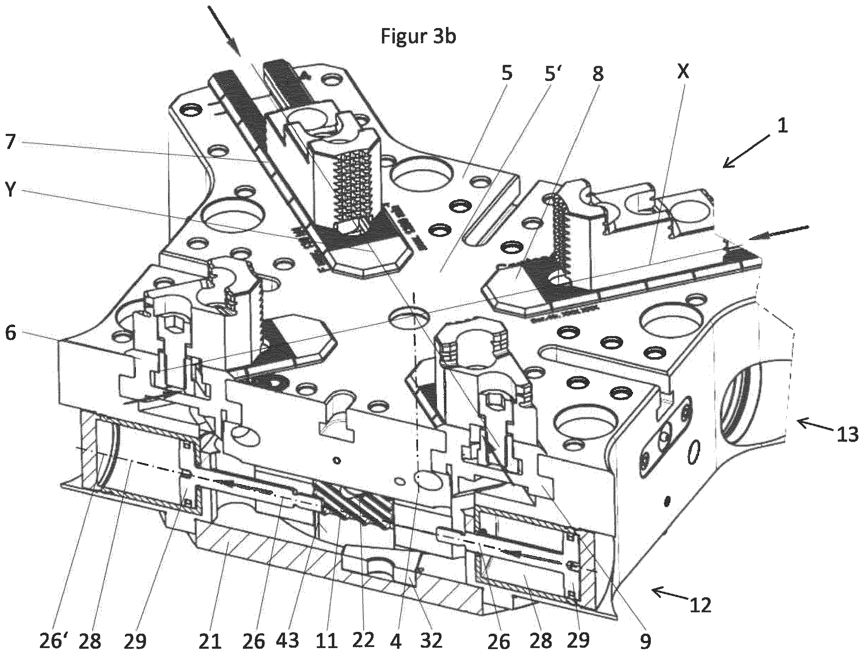

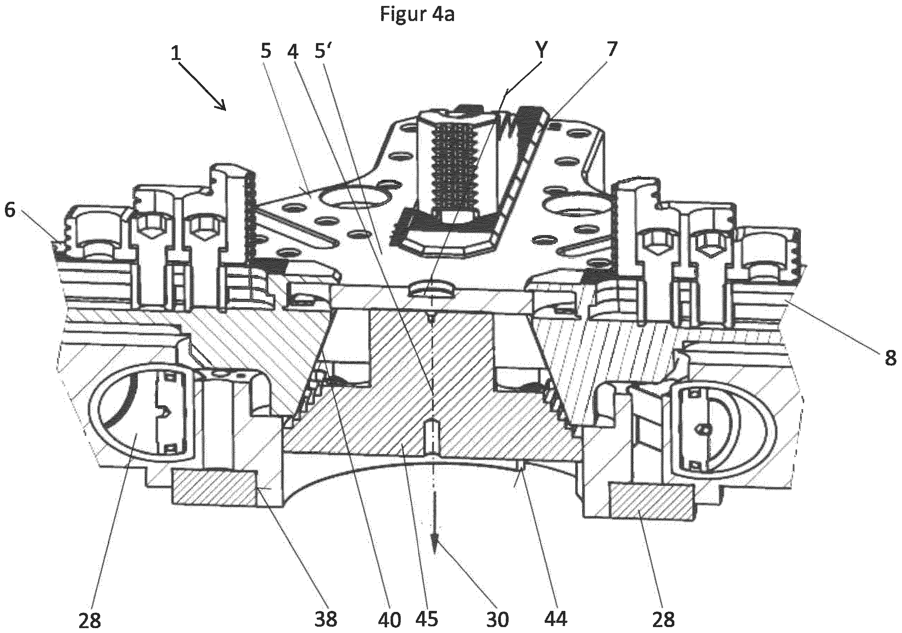

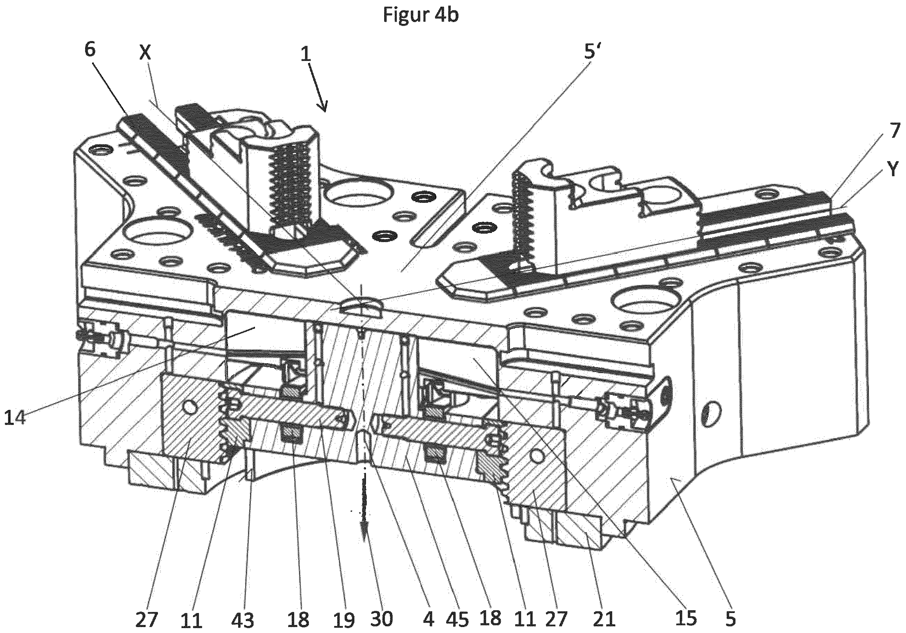

Zunächst soll durch die Figuren 3a, 3b und 4 der Bewegungsablauf für die Betätigung der vier Spannbacken 6, 7, 8 und 9 durch die beiden Antriebseinrichtungen 12,13 erläutert sein.

Da die Antriebseinrichtungen 12 und 13 parallel zueinander und gegenüberliegend zu der Zentrierachse 4 angeordnet sind, ist es technisch erforderlich, dass die Antriebseinrichtungen 12 und 13 in entgegengesetzter Richtung betätigt sind, um eine synchrone Bewegung der paarweise an diesen gekoppelten Spannbacken 6, 7 oder 8, 9 zu erreichen.

Die Antriebseinrichtungen 12 und 13 sind dabei als erste Antriebsvariante als hydraulisch oder pneumatisch betriebener Druckkolben ausgestaltet und weisen entsprechende Hub- und Druckräume 28 auf, in denen ein entsprechendes Medium durch entsprechende Ventilöffnungen A, B wechselweise ein- bzw. auspressbar ist. Die Hub-Druckräume 28 sind von einer Druckplatte 29 unterteilt und deren axiale Bewegung die Zugkraft, mit der Bezugsziffer 30 gekennzeichnet, erzeugt. Die Ansteuerung der Antriebseinrichtungen 12 und 13 ist hinlänglich bekannt, sodass technisch vorausgesetzt werden kann, dass die den jeweiligen Bewegungen der Antriebseinrichtungen 12 und 13 zugeordnete Ansteuerungen durch Ein- und Auspressen der vorgesehenen Medien stattfindet.

Folglich sind in den Figuren 1, 2a, 2b, 3a und 3b die Bewegungsabläufe für die Zustellung der Spannbacken 6, 7, 8 und 9 zu entnehmen. Die in den Führungsnuten 20 eingesetzten Spannbacken 6, 7, 8 und 9 sind dabei über Keilhakengestänge 40 mit dem Antriebskolben 10 gekoppelt. An dem Antriebskolben 10 ist eine Übertragungsplatte 11 befestigt, die nach außen gerichtete Verzahnungen 22 aufweist, die mit einer Kolbenstange 26, die der jeweiligen Antriebseinrichtung 12 bzw. 13 zugeordnet ist, die über das Koppelteil 27 miteinander verbunden sind. Wenn demnach die Hydraulikkolben als wesentlicher Bestandteil der Antriebseinrichtung 12 oder 13 in entsprechender Weise durch die Ventilöffnungen A und B angesteuert sind und demnach der jeweilige Hub-Druckraum 28 mit dem Medium befüllt bzw. entleert ist, dann bewegt sich zunächst die Kolbenstange 26 linear in die entsprechend vorgegebene Richtung. Da die Koppelstange 26 mit dem Koppelteil 27 verbunden ist und die Schrägverzahnung des Koppelteils 27 sowohl mit dem Synchronring 21 als auch mit dem Keilhakengestänge 40 verbunden ist, werden die jeweiligen Kulissensteine 14 bis 17 aufgrund der auf den Zugkolben 45 einwirkenden Zugkraft 30, der nach unten bewegt ist, radial in Richtung der Zentrierachse 4 bewegt.

Des Weiteren weist die Kolbenstange 26 eine Längsachse 26' auf, die senkrecht zu der Zentrierachse 4 ausgerichtet ist. Vorzugsweise steht die Auflage 5' senkrecht zu der Zentrierachse 4 und die Längsachse 26' verläuft zu der Auflage 5' parallel.

Da die Spannbacken 6, 7, 8 und 9 in der Führungsnut 20 radial geführt gehalten sind und aufgrund der vorhandenen Schrägverzahnung zwischen diesen und den Kulissensteinen 14 bis 17 entsteht eine radiale Zustellbewegung in Richtung der Zentrierachse 4 oder die vier Spannbacken 6, 7, 8, 9 werden von der Zentrierachse 4 nach außen bewegt. Durch die Antriebseinrichtungen 12 und 13 ist der Antriebskolben 10 gemäß Figur 4 durch eine Zugkraft 30 nach unten gezogen, wodurch die vier Spannbacken 6, 7, 8 und 9 entsprechend den vorstehenden Erläuterungen radial in der jeweiligen Führungsnut 20 bewegt sind.

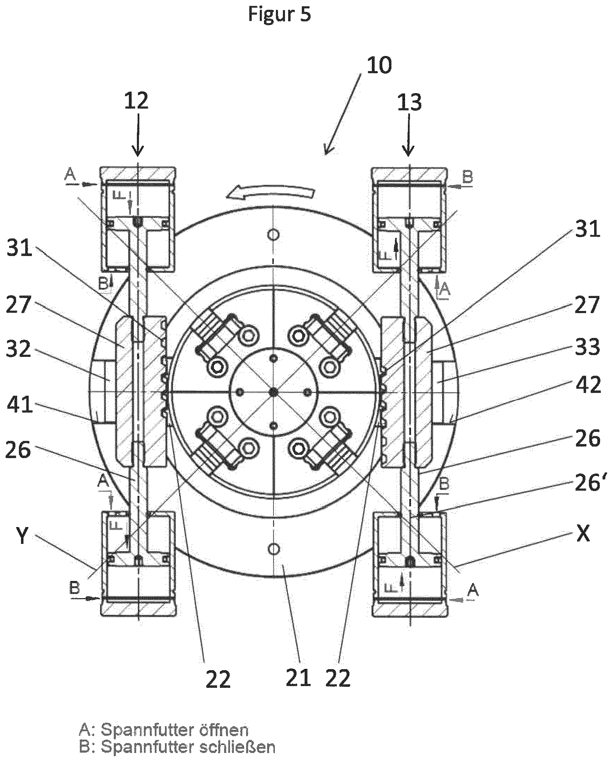

Wenn zwei oder mehr der Antriebseinrichtungen 12 und 13 vorgesehen sind, dann sind die Bewegungen untereinander zu synchronisieren. Eine solche Bewegungsabstimmung zwischen den beiden Antriebseinrichtungen 12 und 13 erfolgt durch den Synchronring 21, der in Figur 5 abgebildet ist. Der Synchronring 21 weist dabei zwei Führungsnuten 41, 42 auf, die in jeweils einen Kulissenstein 32 und 33 formschlüssig umgreifen. Die Kulissensteine 32, 33 sind dabei einem Koppelteil 27 zugeordnet, das fest mit dem jeweiligen Antriebseinrichtungen 12 oder 13 verbunden ist. Das Koppelteil 27 bewegt sich demnach mit den jeweiligen Antriebseinrichtungen 12 oder 13 und der Synchronring 21 stellt demnach eine Art Getriebe für den Bewegungsabgleich der beiden Antriebseinrichtungen 12 und 13 dar. Wenn eines der Antriebseinrichtungen 12 bzw. 13 schneller oder langsamer aufgrund der Befüllung der Hub-Druckräume 28 bewegt ist, dann gleicht der Synchronring 21 diese Unterschiede der Bewegungsgeschwindigkeiten oder Bewegungskräfte der Antriebseinrichtungen 12 und 13 aus. Folglich ist der Antriebskolben 31 durch die beiden Antriebseinrichtungen 12 und 13 und den Synchronring 21 durch die Schrägverzahnungen 22, 23 trieblich gekoppelt.

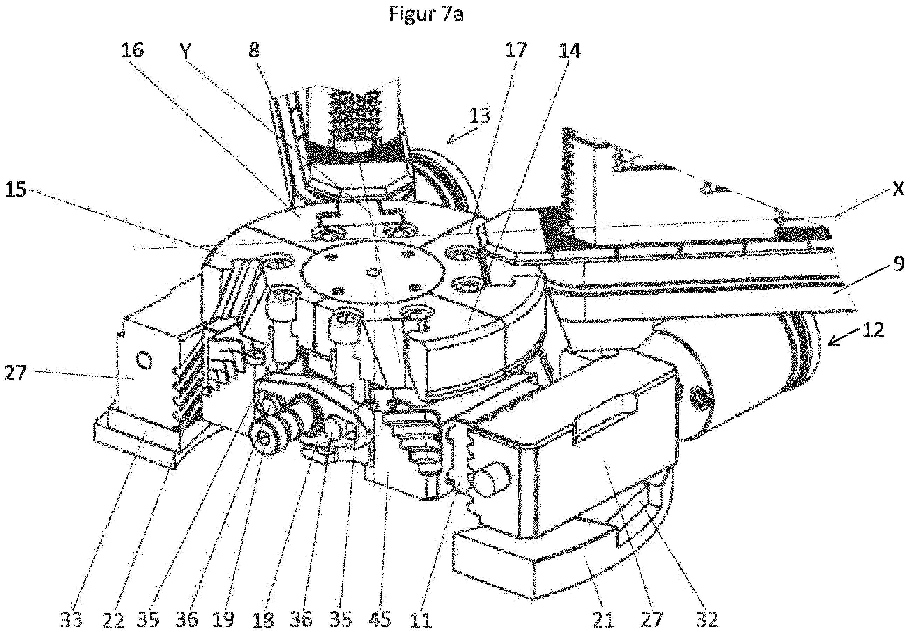

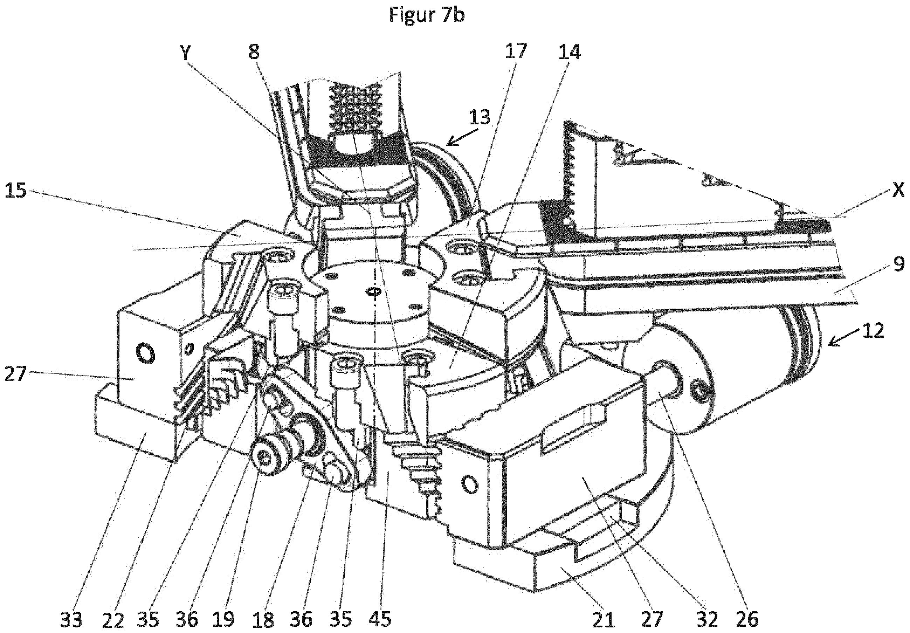

Darüber hinaus ist Figur 7a, 7b zu entnehmen, dass im Inneren des Antriebskolbens 10 vier Ausgleichs-Pendellager in Form einer Wippe 18 vorhanden sind. Die jeweilige Wippe 18 ist dabei über einen Lagerbolzen 19 drehbar bzw. verschwenkbar mit dem Antriebskolben 10 verbunden und zwei jeweils benachbarte Spannbacken 6, 7 oder 8, 9 sind mit einer der beiden freien Stirnseiten der Wippe 18 über einen Kulissenstein 14, 15, 16 oder 17 verbunden. Somit bilden die Antriebskolben 10 mit den Kulissensteinen 14, 15, 16, 17 eine Baueinheit.

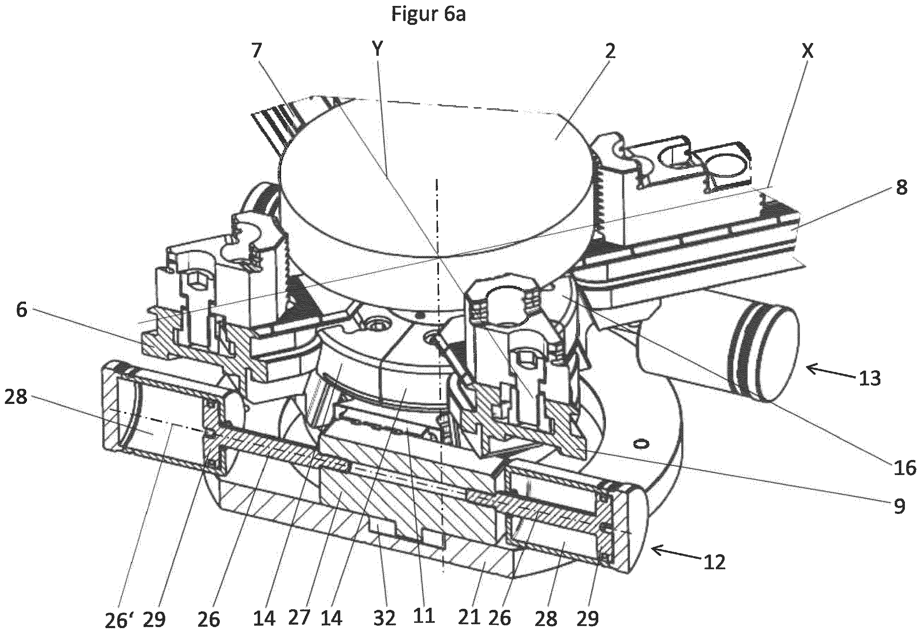

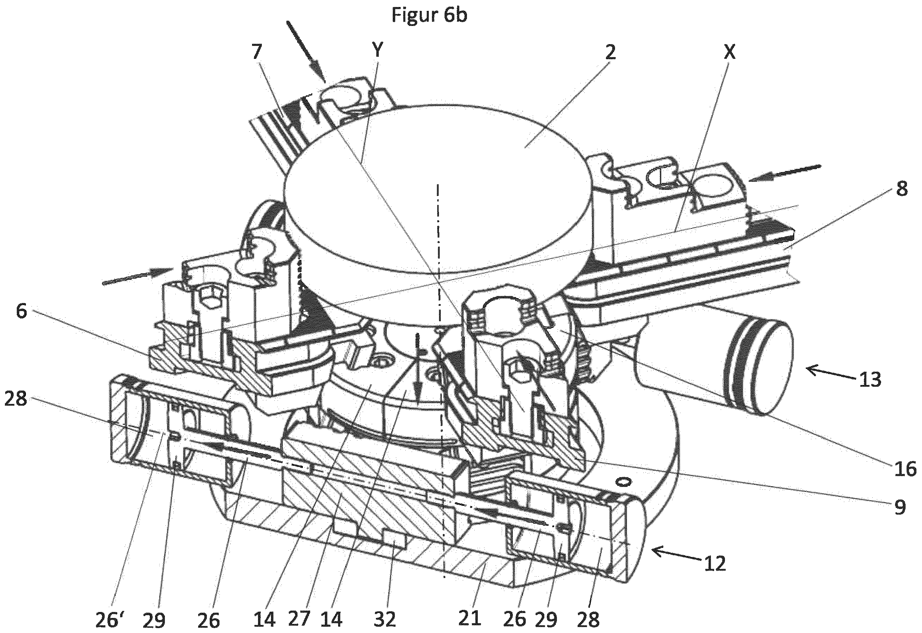

Gemäß den Figuren 6a und 6b soll ein Bewegungsausgleich stattfinden, wenn zwei gegenüberliegende Spannbacken 6, 8 oder 7, 9 zeitlich vorher mit dem Werkstück 2 in Wirkkontakt gelangen als die beiden dazu benachbarten Spannbacken 7, 9 bzw. 6, 8. Bei rechteckförmigen Werkstücken 2 sind nämlich die Kantenlängen unterschiedlich, sodass der Auftreffzeitpunkt der vier Spannbacken 6, 7, 8, 9 paarweise unterschiedlich stattfindet. Sobald ein erstes Paar der Spannbacken 6, 8 in Wirkkontakt mit dem Werkstück 2 gelangt, die Betätigungskräfte durch die Antriebseinrichtung 12, 13 weiterhin aufrechterhalten bzw. beibehalten sind und die beiden anderen Spannbacken 7 und 9 von der Oberfläche des einzuspannen Werkstückes 2 noch beabstandet sind, soll ein Bewegungsausgleich durch die Wippen 18 erfolgen. Dabei verschwenken die Wippen 18 jeweils um den Lagerbolzen 19, sodass diese Bewegung der jeweiligen Spannbacke 6, 8 gestoppt sind, wenn diese an dem Werkstück anliegen und die beiden anderen Spannbacken 7, 9 in Richtung des Werkstückes 2 weiterhin zugestellt sind. Erst wenn alle vier Spannbacken 6, 7, 8 und 9 in Wirkkontakt mit dem Werkstück 2 stehen, erfolgt der eigentliche Spannvorgang, denn die Verschwenkbewegung der Wippen 18 sind beendet und aufgrund der vorhandenen Schrägverzahnungen zwischen den Antriebseinrichtungen 12, 13 und den Spannbacken 6, 7, 8 und 9 entsteht eine Spannkraft, durch die das Werkstück 2 gehalten ist.

Aufgrund der vorstehend beschriebenen Ausgleichsbewegungen durch die vier Wippen 18 zwischen zwei benachbarten Spannbacken 6, 7, 8 und 9 erfolgt demnach eine Bewegungssynchronisierung beim Zustellen der Spannbacken 6 bis 9, wodurch nicht nur Werkstücke 2 unterschiedliche Kantenlängen, sondern auch Werkstücke 2 koaxial zur Zentrierachse 4 ausgerichtet werden können, die zunächst unsymmetrisch auf der Auflagefläche 5' des Futterkörpers 5 aufliegen. Die vier Spannbacken 6, 7, 8 und 9 schieben nämlich das Werkstück 2 in das Zentrum des Futterkörpers 5, wodurch die Symmetrieachse des Werkstückes 2 koaxial zur Zentrierachse 4 verschoben und ausgerichtet ist.

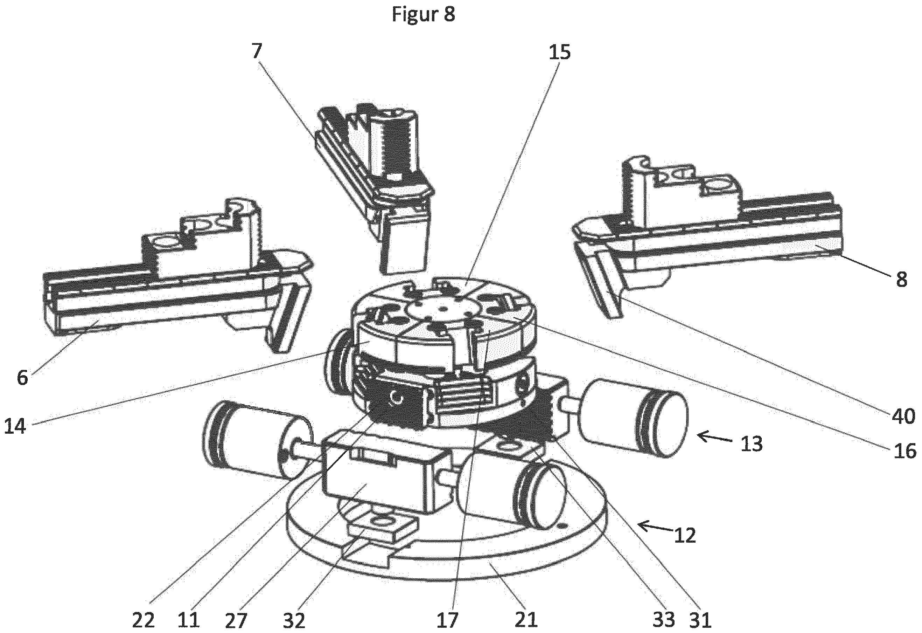

Aus den Figuren 7a, 7b bis 8 sind die mechanischen Verbindungen zwischen den Spannbacken 6, 7, 8 und 9, den Antriebseinrichtungen 12, 13 und der Wippe 18 zu erkennen. Sobald nämlich gemäß Figur 7b die Wippe 18 um den Lagerbolzen 19 in eine Richtung verschwenkt ist, wandert einer der Kulissensteine 14, 15, 16 oder 17 parallel zu der Zentrierachse 4 nach unten und die entsprechende Zustellbewegung der daran befestigten Spannbacken 6, 7, 8 oder 9 ist während dieses Vorgangs der Wippe 18 beendet und die Erzeugung einer Spannkraft erfolgt erst nachdem sämtliche vier Spannbacken 6, 7, 8, 9 an der Außenseite des einzuspannenden Werkstückes 2 anliegen.

Die vier Funktionsebenen I, II, III und IV sind wie folgt voneinander zu unterscheiden. Die Funktionsebene I umfasst die triebliche Wirkverbindung zwischen dem Synchronring 21 und den jeweiligen Antriebseinrichtungen 12 und 13. Die an dem Koppelteil 27 aufgesteckten Kulissensteine 32 und 33 sind formschlüssig mit dem Synchronring 21 verbunden. Durch diese Wirkverbindung ist gewährleistet, dass sowohl die Betätigungskräfte der Antriebseinrichtungen 12 und 13 als auch deren Bewegungsgeschwindigkeit miteinander vollständig übereinstimmen.

Die Funktionsebene II ist durch die an dem Koppelteil 27 angearbeitete Schrägverzahnung 22 gebildet, die in Wirkverbindung zu dem Synchronring 21 steht. Durch die entgegengesetzten Linearbewegungen der Antriebseinrichtungen 12 und 13 erzeugt die an dem jeweiligen Koppelteil 27 vorgesehene Verzahnung 22, die in die Schrägverzahnung 22 des Antriebskolbens 10 bzw. Übertragungsplatte 11 eingreifen, eine radiale Bewegung der Spannbacken 6, 7, 8 und 9. Der Antriebskolben 10 ist dabei gegen Verdrehung in den Führungsnuten 43 und 44 gesichert.

Die Funktionsebene III bezieht sich auf die im Inneren des Antriebskolbens 10 vorhandenen Ausgleichsmechaniken in Form der Wippe 18 und deren zugeordneten Bauteilen, denn die beiden freien Stirnseiten der jeweiligen Wippe 18 sind jeweils mit einem Übertragungsstift 34, 35 mit einem der beiden Kulissensteine 14 bis 17 verbunden, die um einen Kopf 36 verdrehbar an der Wippe 18 montiert sind. Insgesamt sind vier Wippen 18 vorhanden, die jeweils über den Lagerbolzen 19 im Antriebskolben 10 drehbar bzw. verschwenkbar gelagert sind. An beiden Stirnseiten der Wippe 18 sind jeweils Kulissensteine 14, 15, 16 und 17 befestigt. Durch Verschwenkungen der Wippen 18 auf eine Seite bewegen sich die Kulissensteine 14, 15, 16 und 17 axial auf und ab. Die Verbindung der Wippen 18 mit den Kulissensteinen 14, 15 oder 16 und 17 erzeugen ein paarweises synchrones Auf- und Abbewegen der Kulissensteine 14, 15, 16 und 17. Es bewegen sich demnach die gegenüberliegenden Kulissensteine 14 und 16 bzw. 15 und 17 synchron. Somit bildet sich aus dem Zugkolben 45, den Wippen 18, den Lagerbolzen 19 und den Kulissensteinen 14, 15, 16 und 17 die Baueinheit des Antriebskolbens 10.

Die Funktionsebene IV ist aus der Wirkweise der Kulissensteine 14, 15, 16 und 17 sowie den Spannbacken 6, 7, 8 und 9 gebildet, die trieblich über das Keilhakengestänge 40 jeweils miteinander gekoppelt sind. Durch die axialen Bewegungen der Kulissensteine 14, 15, 16 und 17 entsteht eine radiale zur Zentrierachse 4 zustellbare oder wegbewegbare Bewegung der Spannbacken 6, 7, 8 und 9.

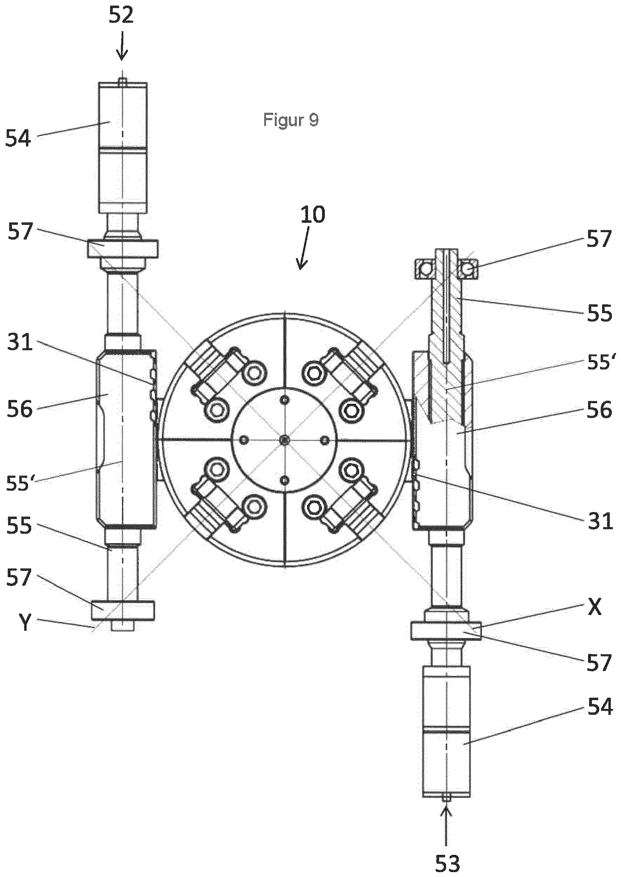

In Figur 9 ist eine weitere Antriebsvariante für die Bewegungen der Spannbacken 6, 7, 8 und 9 zu entnehmen. Dabei sind die Druckkolben durch einen Elektromotor 54 ersetzt. Die Antriebseinrichtungen sind mit den Bezugsziffern 52 und 53 gekennzeichnet. Der jeweilige Elektromotor 54 ist dabei in zwei Winkelrichtungen, also im Uhrzeigersinn und entgegen des Uhrzeigersinns, bewegbar.

Der jeweilige Elektromotor 54 ist mit einer Gewindespindel 55, die um ihre Längsachse 55' rotierbar in einem Spindellager 57 drehbar gehalten ist, bewegbar. Das Spindellager 57 ist dabei in dem Futterkörper 5 eingebaut. Die Gewindespindel 55 kann demnach ausschließlich um ihre Längsachse 55' rotieren. An der Außenseite der Gewindespindel 55 ist ein Koppelteil 56 vorgesehen, das von der Rotation der Gewindespindel 55 in eine lineare Bewegung überführt ist. Das Koppelteil 56 ist dabei axial beweglich in dem Futterkörper 5 abgestützt und die Rotationsbewegungen der Gewindespindel 55 sind in axiale Bewegungen des Koppelteils 56 in bekannter Weise umgewandelt. An dem Koppelteil 56 sind die entsprechenden Verzahnungen 31 eingearbeitet, die mit dem Synchronring bzw. dem Antriebskolben 10 in mechanischer Wirkverbindung stehen.

Sobald demnach der Elektromotor 54 in eine vorgegebene Rotationsrichtung überführt ist, dreht sich die Gewindespindel 55 um ihre Längsachse 55', wodurch das Koppelteil 56 in eine Linearbewegung überführt ist. Die weiteren mechanischen Zustellkräfte und Bewegungsabläufe im Inneren des Futterkörpers 5 entsprechen den Figuren 1 bis 8.

Beiden Antriebsvarianten ist gemeinsam, dass die Kolbenstange 26 und die Gewindespindel 55 senkrecht zu der Zentrierachse 4 verlaufen bzw. ausgerichtet sind. Dadurch ist gewährleistet, dass für die Erzeugung und Übertragung der erforderlichen Bewegungskräfte kein Bauraum benötigt ist, der parallel zu der Zentrierachse verläuft und somit die Bauhöhe des Futterkörpers 5 wesentlich erhöht.

## Patentansprüche

1. Spannfutter (1), durch das Werkstücke (2) vereinzelt zu deren Bearbeitung durch eine Werkzeugmaschine (3) abstützbar und koaxial zu einer Zentrierachse (4) ausrichtbar sind, die als Bezugsreferenz für die Bearbeitung des Werkstückes (2) durch die Werkzeugmaschine (3) dient,
- mit einem Futterkörper (5),
- mit vier an dem Futterkörper (5) radial beweglich gelagerten Spannbacken (6, 7, 8, 9), die paarweise in einer X- oder Y-Achse angeordnet sind und durch die das Werkstück (2) fluchtend zu der Zentrierachse (4) ausgerichtet und während des Bearbeitungsvorganges gehalten ist,
- und mit einem linear beweglich in oder an dem Futterkörper (5) gelagerten Zugkolben (45), der mit der jeweiligen Spannbacke (6, 7, 8, 9) trieblich derart gekoppelt ist, dass die Spannbacken (6, 7, 8, 9) während der Linearbewegung des Zugkolbens (45) radial in Richtung des einzuspannenden Werkstückes (2) synchron zugestellt oder von diesem wegbewegt sind,
- wobei der Zugkolben (45) koaxial zu der Zentrierachse (4) im Inneren des Futterkörpers (5) angeordnet ist und von zwei Antriebseinrichtungen (12, 13 oder 52, 53) axial betätigbar ist,
**dadurch gekennzeichnet,**
**dass** jede Antriebseinrichtung (12, 13, 52, 53) eine linear bewegliche Kolbenstange (26) oder Gewindespindel (55) aufweist, deren jeweilige Längsachse (26' oder 55') senkrecht zu der Zentrierachse (4) angeordnet ist.

2. Spannfutter nach Anspruch 1,
**dadurch gekennzeichnet,**
**dass** innerhalb des Futterkörpers (5) eine Baueinheit angeordnet ist, die aus jeweils einer der Spannbacken (6, 7, 8, 9) zugeordneten und mit diesen gekoppelten Kulissensteinen (14, 15, 16, 17) und zwei Wippen (18) besteht, die jeweils um einen Lagerbolzen (19) verschwenkbar an dem Futterkörper (5) abgestützt sind und durch die jeweils zwei benachbarte Kulissensteine (14, 15 oder 16, 17) trieblich miteinander gekoppelt sind, und dass jeder Kulissenstein (14, 15, 16, 17) mit einem der Spannbacken (6, 7, 8, 9) trieblich gekoppelt ist.

3. Spannfutter nach Anspruch 1 oder 2,
**dadurch gekennzeichnet,**
**dass** die zwei Antriebseinrichtungen (12, 13 oder 52, 53) parallel zueinander und beabstandet zu der Zentrierachse (4) auf der Außenseite des Futterkörpers (5) oder in dessen Inneren angeordnet sind.

4. Spannfutter nach Anspruch 3,
**dadurch gekennzeichnet,**
**dass** im Inneren des Futterkörpers (5) ein Synchronring (21) drehbar gelagert ist, dass der Synchronring (21) zwei Führungsnuten (41, 42) aufweist, dass an jedem Paar vonAntriebseinrichtungen (12, 13 oder 52, 53) ein Koppelteil (27) befestigt ist, und dass an jedem Koppelteil (27) ein Kulissenstein (32, 33) angeformt ist, der in die Führungsnuten (41, 42) des Synchronrings (21) formschlüssig eingreiftoder in diese eingesetzt ist.

5. Spannfutter nach Anspruch 4,
**dadurch gekennzeichnet,**
**dass** die Kulissensteine (32, 33) des Synchronringes (21) koaxial zu der Zentrierachse (4) in dem Futterkörper (5) beweglich zu diesem gelagert sind.

6. Spannfutter nach einem der vorgenannten Ansprüche 3 bis 5,
**dadurch gekennzeichnet,**
**dass** die beiden Antriebseinrichtungen (12, 13) als hydraulisch betriebener Druckkolben mit der Kolbenstange (26) und die beiden Antriebseinrichtungen (52, 53) als Elektromotor (54) und einer mit diesem trieblich verbundenen Gewindespindel (55) ausgestaltet sind, die jeweils an dem Koppelteil (27) befestigt sind.

## Claims

1. A chuck (1) by means of which workpieces (2) can be supported individually for machining by a machine tool (3) and aligned coaxially to a centering axis (4), which serves as a reference for machining the workpiece (2) by the machine tool (3),
- having a chuck body (5),
- having four clamping jaws (6, 7, 8, 9) that are radially movably mounted on the chuck body (5) and arranged in pairs in an X or Y plane and by means of which the workpiece (2) is aligned with respect to the centering axis (4) and held during the machining process,
- and having a pull piston (45) that is mounted in or at the chuck body (5) so as to be linearly movable and which is drivably coupled to a respective clamping jaw (6, 7, 8, 9) such that during the linear movement of the pull piston (45) the clamping jaws (6, 7, 8, 9) are radially fed in the direction of the workpiece (2) to be clamped or moved away from same in a synchronous manner,
- wherein the pull piston (45) is arranged coaxially with respect to the centering axis (4) inside the chuck body (5) and can be axially actuated by two drive means (12, 13 or 52, 53),
**characterised in that**
each of the drive means (12, 13, 52, 53) has a linearly movable piston rod (26) or threaded spindle (55), whose respective longitudinal axis (26' or 55') is arranged to be perpendicular with respect to the centering axis (4).

2. The chuck according to claim 1,
**characterised in that**
within the chuck body (5) a construction unit is provided consisting of sliding blocks (14, 15, 16, 17) each assigned to and coupled with one respective of the clamping jaws (6, 7, 8, 9), and two rockers (18) each supported at the chuck body (5) such as to be pivotable about a bearing pin (19) and by means of which two respective neighbouring sliding blocks (14, 15 or 16, 17) are drivingly coupled with one another, and **in that** each of the sliding blocks (14, 15, 16, 17) is drivingly coupled with one of the clamping jaws (6, 7, 8, 9).

3. The chuck according to claims 1 or 2,
**characterised in that**
the two drive means (12, 13 or 52, 53) are arranged in parallel to one another and spaced apart from the centering axis (4) on the outside of the chuck body (5) or inside of it.

4. The chuck according to claim 3,
**characterised in that**
inside the chuck body (5), a synchronizer ring (21) is rotatably supported, **in that** the synchronizer ring (21) has two guide grooves (41, 42), and **in that** a coupling part (27) is mounted to each pair of drive means (12, 13 or 52, 53), and **in that** a sliding block (32, 33) is formed to each coupling part (27), which positively engages or is inserted into the guide grooves (41, 42) of the synchronizer ring (21).

5. The chuck according to claim 4,
**characterised in that**
the sliding blocks (32, 33) of the synchronizer ring (21) are supported coaxially with respect to the centering axis (4) in the chuck body (5) so as to be movable with respect thereto.

6. The chuck according to any of the preceding claims 3 to 5,
**characterised in that**
the two drive means (12, 13) are designed to be a hydraulically driven pressure piston having the piston rod (26) and **in that** the two drive means (52, 53) are designed to be an electric motor (54) and a threaded spindle (55) drivingly coupled thereto, each of which are mounted to the coupling part (27).

## Revendications

1. Mandrin de serrage (1) au moyen duquel des pièces à usiner (2) peuvent être supportées individuellement pour être usinées par une machine-outil (3) et alignées coaxialement à un axe de centrage (4), qui sert de référence pour l'usinage de la pièce à usiner (2) par la machine-outil (3),
- comportant un corps de mandrin (5),
- comportant quatre mâchoires de serrage (6, 7, 8, 9) montées radialement mobiles sur le corps du mandrin des serrage (5) et disposées par paires dans un plan X ou Y et au moyen desquelles la pièce à usiner (2) est alignée par rapport à l'axe de centrage (4) et maintenue pendant le processus d'usinage,
- et ayant un piston de traction (45) qui est monté dans ou sur le corps du mandrin de serrage (5) de manière à pouvoir se déplacer linéairement et qui est couplé par entraînement à une mâchoire de serrage respective (6, 7, 8, 9) de sorte que pendant le mouvement linéaire du piston de traction (45), les mâchoires de serrage (6, 7, 8, 9) sont amenées radialement dans la direction de la pièce à usiner (2) à serrer ou éloignées de celle-ci de manière synchronisée,
- dans lequel le piston de traction (45) est disposé coaxialement par rapport à l'axe de centrage (4) à l'intérieur du corps du mandrin de serrage (5) et peut être actionné axialement par deux moyens d'entraînement (12, 13 ou 52, 53),
**charactérisé en ce que**
chacun des moyens d'entraînement (12, 13, 52, 53) comporte une tige de piston (26) ou une broche filetée (55) à mobilité linéaire, dont l'axe longitudinal respectif (26' ou 55') est disposé de manière à être perpendiculaire à l'axe de centrage (4).

2. Mandrin de serrage selon la revendication 1,
**charactérisé en ce que**
le corps du mandrin (5) comporte une unité de construction composée de blocs coulissants (14, 15, 16, 17), chacun associé et couplé à l'une des mâchoires de serrage (6, 7, 8, 9), et de deux bascules (18) supportées chacune par le corps du mandrin (5) de manière à pouvoir pivoter autour d'un axe de roulement (19) et au moyen desquelles deux blocs coulissants voisins respectifs (14, 15 ou 16, 17) sont couplés par entraînement l'un à l'autre, et en ce que chacun des blocs coulissants (14, 15, 16, 17) est couplé par entraînement à l'une des mâchoires de serrage (6, 7, 8, 9).

3. Mandrin selon les revendications 1 ou 2,
**charactérisé en ce que**
les deux moyens d'entraînement (12, 13 ou 52, 53) sont disposés parallèlement l'un à l'autre et à distance de l'axe de centrage (4) à l'extérieur du corps du mandrin (5) ou à l'intérieur de celui-ci.

4. Mandrin de serrage selon la revendication 3,
**charactérisé en ce que**
à l'intérieur du corps du mandrin (5), un anneau de synchronisation (21) est supporté en rotation, en ce que l'anneau de synchronisation (21) a deux rainures de guidage (41, 42), et en ce qu'une pièce d'accouplement (27) est montée sur chaque paire de moyens d'entraînement (12, 13 ou 52, 53), et en ce qu'un bloc coulissant (32, 33) est formé sur chaque pièce d'accouplement (27), qui s'engage positivement ou est inséré dans les rainures de guidage (41, 42) de l'anneau de synchronisation (21).

5. Mandrin de serrage selon la revendication 4,
**charactérisé en ce que**
les blocs coulissants (32, 33) de l'anneau de synchronisation (21) sont supportés coaxialement par rapport à l'axe de centrage (4) dans le corps du mandrin (5) de manière à pouvoir se déplacer par rapport à celui-ci.

6. Le mandrin selon l'une des revendications précédentes 3 à 5,
**charactérisé en ce que**
les deux moyens d'entraînement (12, 13) sont conçus pour être un piston de pression à entraînement hydraulique comportant la tige de piston (26) et en ce que les deux moyens d'entraînement (52, 53) sont conçus pour être un moteur électrique (54) et une broche filetée (55) couplée par entraînement à celui-ci, chacun d'eux étant monté sur la pièce d'accouplement (27).
